# EUROPEAN PATENT APPLICATION

(11) **EP 4 671 801 A1**
(43) Date of publication of application: **31.12.2025**
(21) Application number: 24184275.6
(22) Date of filing: 25.06.2024
(51) Int. Cl.: G01S 5/00, G01S 5/02

(54) **METHOD, SYSTEM, AND NETWORK FOR LOCATING A TAG**

(71) Applicant: Hilti Aktiengesellschaft, 9494 Schaan (LI)
(72) Inventor: Malik, Muhammad Salman, 86159 Augsburg (DE)
(74) Representative: Hilti Aktiengesellschaft Corporate Intellectual Property

(57) **Abstract**

A method to determine a location of a tag (110) is proposed. The method comprises the steps of: setting up a network comprising tag detection devices (220) and at least one connection of the network with an asset management system (150) via a first gateway (120-1); defining in the asset management system a location information for the tag detection devices; scanning with the tag detection devices for the tag; sending scan information from the tag detection devices to the asset management system via the network, comprising detection information from the one or more tag detection devices, which detect the tag; determining by the asset management system the location of the tag, comprising the steps of: using the scan information; and using the location information.

## Description

### FIELD OF INVENTION

The present invention relates to a method to determine a location of a tag, a system for determining a location of a tag, a network, comprising tag detection devices, and an asset management system, adapted to execute together with the tag detection devices the method to determine a location of a tag, and a computer program product to execute the method.

### BACKGROUND OF THE INVENTION

There are various situations where it is advantageous to determine a location of assets by an asset management system, e.g., when assets are distributed over a large jobsite or in warehouses, and it is useful to provide information on the location, e.g., the floor on a construction site or the warehouse on a jobsite, where an asset is located, to a user.

Therefore, assets may comprise tags that periodically send advertising packets, so-called beacons, via wireless communication. Devices, e.g., gateways or mobile phones, can receive these advertising packets. When an advertising packet from a tag is received, the receiving device knows that the tag, and therefore the tagged asset, is in its vicinity.

An example for an asset management system is described in "Hilti ON!Track Proaktives Tracking - Immer einen Schritt voraus", https://www.youtube.com/watch?v=b0y5elXzf1Y, Upload October 05, 2021; Retrieved May 06, 2024, Hilti Osterreich.

It is one object of the present invention to improve determining the location of a tag.

### DISCLOSURE OF THE INVENTION

A method to determine a location of a tag is proposed, the method is comprising the steps of: setting up a network, comprising tag detection devices and at least one connection of the network with an asset management system via a first gateway; defining in the asset management system a location information for the tag detection devices; scanning with the tag detection devices for the tag; sending scan information from the tag detection devices to the asset management system via the network, comprising detection information from the one or more tag detection devices, which detect the tag; determining by the asset management system the location of the tag, comprising the steps of: using the scan information and using the location information.

Setting up a network of tag detection devices enables to determine a location of a tag in relation to the tag detection devices. The network may be a wireless network and/or may comprise wired connections. Setting up the network may also enlarge the area for which the location of the tag may be determined. The network may be set up in various topologies, e.g., as star, mesh, ring, or bus network and as hybrid networks. A free form mesh topology may be formed by tag detection devices placed on a jobsite randomly or according to certain requirements and connected to each other when they are within wireless range of each other. The network comprises at least one connection to an asset management system, thus the information and/or data provided over the network may be evaluated and processed by the asset management system. Depending on the network topology further connections of the network to the asset management system may also be possible.

A tag is comprising a tag wireless sending unit, configured to send advertising packets, particularly, RF advertising packets, so-called beacons. The beacons sent by the tag, may comprise information about the tag, e.g., an identification number. The tag may be attached to an asset, e.g., glued to the asset, or integrated into the asset. E.g., the tag can be embedded in the assets, e.g., in the electronics of a tool or device. The tag may further comprise a battery, particularly a coin cell, a tag processor, and/or a tag memory.

An asset management system may be hosted in a cloud and/or on a server. The asset management system may comprise information, e.g., stored in a database, relating tags to assets, e.g., the tag identification number of the tag may be related in the database to a specific asset. The assets may comprise, in particular, cordless power tools and/or their accessories, e.g., batteries, and chargers. The power tools may comprise a saw, a driver, a wrench, a rotary hammer, a drill, or a screwdriver.

Tag detection devices are devices, which can receive the beacons from the tag. E.g., the tag detection devices scan for beacons and forward in the network information about the received tag, e.g., its tag identification number. The tag detection device may add further information, e.g., on the tag detection device itself, such as a tag detection device identification number, and/or on the tag, e.g., a received signal strength, a time of a received signal. The tag detection device may also forward information about other tag identification devices, e.g., about network neighbors or about a received signal strength of a signal from another tag detection device. Tag detection devices may be separate devices or may have other functionalities, e.g., a battery, particularly of a power tool, or a charger may be used as tag detection device. Tag detection devices comprise a tag detection device wireless receiving unit and may comprise a tag detection device processor and/or memory. The tag detection devices comprise a tag detection device sending unit, in particular for sending wireless signals, to forward received, processed, and/or stored data and/or information.

In the asset management system, a location information of tag detection devices is defined, i.e., a relation of a tag detection device to a location is stored, e.g., in a database. Defining the location information may be done manually, e.g., by assigning to, at least some, tag detection devices a location. A location may be, e.g., a warehouse, a container, a floor, a room, and/or an area on a jobsite. Automation tools, e.g., based on artificial intelligence, may be used to support the assignment of locations to tag detection devices.

The tag detection devices scan for beacons of the tag. E.g., the tag detection devices may be, at least from time to time, in a listening mode. When the tag sends a beacon and the beacon is received by a tag detection device, the tag detection device may process the data contained in the beacon, e.g., the tag identification number and/or the signal strength of the beacon, and store information about the received beacon in its memory. Detection information comprises received, processed, and/or stored information.

The tag detection devices send scan information, including the detection information, via the network to the asset management system. The tag detection devices may regularly send information, e.g., on their status, on scans, whether a tag is detected or not, to the asset management system. When a tag is detected by a tag detection device, detection information is forwarded.

In the asset management system, the scan information, including the detection information, is used to determine the location of the tag. The asset management system may, e.g., use the information which tag detection device has detected the tag, when only a single tag detection device has received beacons from a tag, to determine as location the location information assigned to this tag detection device. The asset management system may use additional information, e.g., the signal strength of a beacon of a tag, received by several tag detection devices, to calculate a likely location. The asset management may provide or forward the location to an end device, e.g., a smart phone, a tablet PC, and/or a laptop of a user.

In an embodiment, the set up network is a mesh network, particularly a wireless mesh network.

Particularly, a mesh network is a local area network topology in which the infrastructure nodes, i.e., in this case, e.g., the tag detection devices, may connect directly, dynamically, and non-hierarchically to other nodes and cooperate with one another to efficiently route data, e.g., to the asset management system, e.g., hosted in a cloud. The lack of dependency on one node allows for several nodes to participate in the relay of information. Such wireless mesh networks can dynamically self-organize and self-configure, which can reduce installation overhead. The ability to self-configure enables dynamic distribution of workloads, particularly in the event a few nodes should fail. This in turn may contribute to fault-tolerance and reduced maintenance costs. The mesh network may be a partially connected or a fully connected mesh network. A wireless mesh network is a convenient way for a dynamically changing situation, e.g., on a job site, where new tag detection devices may be added to the network and where tag detection devices may be moved. A wireless mesh network can be easily established between tag detection devices and new tag detection devices can easily be integrated in the wireless mesh network automatically or with only a minor administration effort.

In a further embodiment, the tag detection devices comprise a second gateway, which is connected to the asset management system, and/or may comprise a first anchor node, which is connectable or connected to a second anchor node, to the first gateway and/or to the second gateway. Tag detection devices may act as gateways, connecting to a cloud, an asset management system, and/or a second network, such as a cellular or telecommunication network. Tag detection devices may act as anchor nodes, connecting to other anchor nodes and to gateways.

In a further embodiment, the method to determine a location of a tag is further comprising the steps of: monitoring a movement of a moveable tag detection device, of the tag detection devices, to create information on movement; and the step of determining the location of the tag is further comprising the step of: using the information on movement of the moveable tag detection device, when the information on movement indicates the moveable tag detection device has moved, particularly, disregarding the defined location information of the moveable tag detection device, when the information on movement indicates it has moved.

Jobsites are dynamical environments and tag detection devices may be moved on a jobsite. When a tag detection device is moved, the location in the asset management system may be incorrect after the movement. When a movement of a moveable tag detection device is monitored, a movement of a moveable tag detection device may be detected and the information on movement may be used in the step of determining the location. E.g., detection information of a moveable tag detection device about a tag may be disregarded, when the location of the tag is determined, when the information on movement of the moveable tag detection device indicates a movement, only detection information from other tag detection devices may be considered in such a situation. There may be a threshold for a minimum movement, which is used to indicate a movement, thus a small movement may be allowed. A tag detection device may regularly send information on movement to the network or only send movement information when the tag detection device finds an indication for a movement. Information on movement may be processed on the tag detection device and/or in the asset management system. Information on movement may comprise data which may be used to determine whether a movement has occurred.

In a further embodiment, the step of monitoring the movement is comprising monitoring a motion sensor, particularly, an acceleration sensor, of the moveable tag detection device.

One way to determine whether a movement has taken place is a direct monitoring of movement by monitoring a movement sensor. The movement sensor might, e.g., be an acceleration sensor. Information on movement may comprise values for acceleration and the period of acceleration. The asset management system may derive from the information on movement, whether a movement has taken place. The moveable tag detection device may additionally or alternatively derive whether a movement has been taken place and may only, e.g., based on a threshold, send movement information with the information that a movement has taken place.

In a further embodiment, the step of monitoring the movement is comprising monitoring indication of changes of distance of the movable tag detection device to one or more others of the tag detection devices, particularly, the indication of changes of distance comprising: changes of a network neighbor of the moveable tag detection device, particularly, in a mesh network; changes of signal strength of signals sent by the moveable tag detection device and received by the one or more others of the tag detection devices; changes of signal strength of signals sent by the one or more others of the tag detection devices and received by the movable tag detection device.

Additionally or alternatively, to monitoring a movement with a sensor, a network environment of a moveable tag detection device might be monitored. Changes of neighbors in a mesh network may indicate a movement, and the network neighbors may be sent as information on movement and may be evaluated by the asset management system. A moveable tag detection device may also evaluate a signal strength of other tag detection devices' transmissions and derive, e.g., that it is moved, when all signals change in strength within a short time. The asset management system may also evaluate information on movement from moveable tag detection devices, where the information on movement comprises signal strengths measured and sent to the asset management system by a moveable tag.

In a further embodiment, an alarm is effected, when the information on movement of the moveable tag detection device indicates it has moved, particularly, effecting a visual or acoustical alarm on the moveable tag detection device, an alarm in the asset management system, and/or an alarm on an end device of a user.

Effecting an alarm, allows for a correction of the location information in the asset management system for a tag detection device. Such a correction may, e.g., be initiated by a user, receiving such an alarm. Search for a tag detection device, which has been moved, may be facilitated by an optical or acoustical alarm by the moved tag detection device.

In a further embodiment, the step of determining the location of the tag is further comprising the step of: using a measured signal strength of the tag received by the one or more tag detection devices, which detect the tag. Measuring the signal strength of a tag, e.g., the signal strength of beacons sent by the tag, can provide additional information on the location of the tag, which might be used by the asset management system, in particular, when several tag detection devices receive the beacons from the tag. The beacon may comprise information about the sending power of the beacon, enabling a better assessment on a distance of a tag from a tag detection device.

In a further embodiment, the step of determining the location of the tag is further comprising the step of: using information on a network neighbor of the one or more tag detection devices, which detect the tag.

In a network, in particular, in a mesh network, the topology of the network may be used for determining the location of a tag. E.g., if not all network neighbors detect a tag, a mapping of the network topology to the location information in the asset management system may provide further insights in the location of the tag.

Further, a system for determining a location of a tag is proposed, the system comprising: a first gateway, configured to connect to an asset management system; a plurality of tag detection devices, configured to detect beacons from a tag and configured to build together with the first gateway a network connected to the asset management system; and the tag, configured to send beacons. Such a system is flexible and easy to install on jobsites. Devices, such as batteries of power tools and/or chargers may be used as tag detection devices, in particular on construction sites. The system can build a network comprising the tag detection devices and can be connected to an asset management system, which may be hosted in cloud, via the first gateway.

In a further embodiment, the tag detection devices comprise: a second gateway, which is configured to be connected to the asset management system, and/or a first anchor node, which is configured to be connected to a second anchor node, to the first gateway and/or to the second gateway, particularly, wherein one or more of the tag detection devices comprises a motion sensor, particularly, an acceleration sensor.

The network may be build comprising only anchor nodes, which can connect to other anchor nodes as tag detection devices, it can be build comprising second gateways, which can connect to a cellular or telecommunication network. The first and/or second gateways may be able also to connect to each other and/or to measure a signal strength of another first and/or second gateway. The network may be built comprising both anchor nodes and second gateways.

Further a network, comprising tag detection devices, and an asset management system, adapted to execute together the described method to determine a location of a tag is proposed. An adapted network in combination with an adapted asset management system enables to execute the describe embodiments of the method for determining a location of a tag.

In a further embodiment, the network and the asset management system are comprising: a first gateway, connected to the asset management system, a plurality of tag detection devices, configured to detect beacons from tags, particularly, wherein the tag detection devices comprise: a second gateway, which is connected to the asset management system, and/or a first anchor node, which is connected to a second anchor node, to the first gateway and/or to the second gateway. The network, particularly, comprises parts from the describe system for determining a location of a tag. In a further embodiment, the network comprises a mesh network comprising anchor nodes as tag detection devices.

Furthermore, a computer program product is proposed, the computer program product comprising instructions to cause the network, comprising tag detection devices, and the asset management system together to execute the method to determine a location of a tag is proposed.

The various embodiments of the method to determine a location of a tag may be combined with the disclosed system for determining a location of a tag, the described network and asset management system, and/or the disclosed computer program product.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

### BRIEF DESCRIPTION OF THE DRAWINGS

Further embodiments, features and advantages of the present invention will become apparent from the subsequent description and dependent claims, taken in conjunction with the accompanying drawings, in which:
- Fig. 1: shows a prior art system to determine a location of a tag;
- Fig. 2: shows a system and a mesh network to determine a location of a tag;
- Fig. 3: shows determining a location of a tag when a tag detection device is moved in a mesh network;
- Fig. 4: shows an alternative determination of a location of a tag when a tag detection device is moved in a mesh network;
- Fig. 5: shows a determination of a location of a tag when only a moved tag detection device is detecting a tag;
- Fig. 6: shows a system to determine a location of a tag with a network of gateways; and
- Fig. 7: shows a flowchart of a method to determine a location of a tag.

In the Figures, like reference numerals designate like or functionally equivalent elements, unless otherwise indicated.

### DETAILED DESCRIPTION OF ILLUSTRATIVE EMBODIMENTS

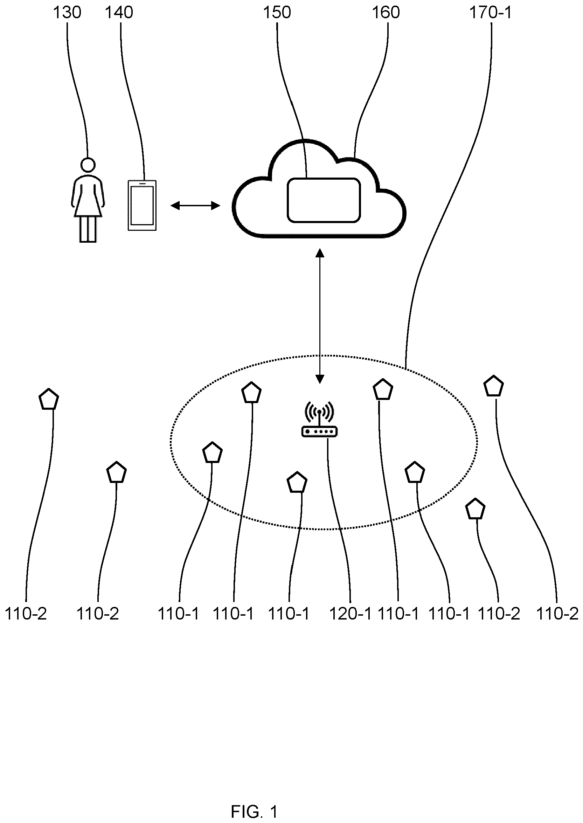

Fig. 1 shows a prior art system to determine a location of a tag 110. A first gateway 120-1 can only scan tags 110-1 (110-1 refers to specific tags or an individual tag, 110 refers to tags in general, including the tags 110-1, mutatis mutandis for other features) in its detection range 170-1. The detection range 170-1 is determined, e.g., by the signal strength of beacons, periodically sent advertising packets, sent by the tags 110; the sensitivity of the first gateway 120, acting as a tag detection device, scanning for, and receiving the beacons; and the environment, e.g., structures damping or reflecting the beacons. The tags 110-2 are out of the detection range 170-1. The tags 110-1 are within the detection range 170-1. The detection range 170-1 may be also referred to as tag detection area.

Such a prior art system may be amended in various ways. The first gateway 120-1 may regularly send scan information to an asset management system 150, e.g., including information, that no beacons are detected. The asset management system 150 may be hosted in a cloud 160. When the first gateway 120-1 receives beacons, e.g., from the tags 110-1, the scan information comprises detection information. The scan information may comprise, e.g., also information on the time of the scanning additionally to the detection information, e.g., information about scanned tags 110-1, e.g., an identification numbers of the tags 110-1, or the signal strength of the beacons received from the tags 110-1. The asset management system 150 may derive from the scan information, comprising the detection information, that the tags 110-1 are in the vicinity of the first gateway 120. Such a setup may be sufficient for smaller areas, e.g., warehouses or containers. The asset management system 150 may have a database which relates tags 110 to assets, to which the tags are attached, e.g., to power tools and their accessories. The asset management system 150 may provide the information on the location of a tag 110, and thus the related asset, to a user via an end device 140, such as a smart phone, a tablet, a laptop and/or a PC.

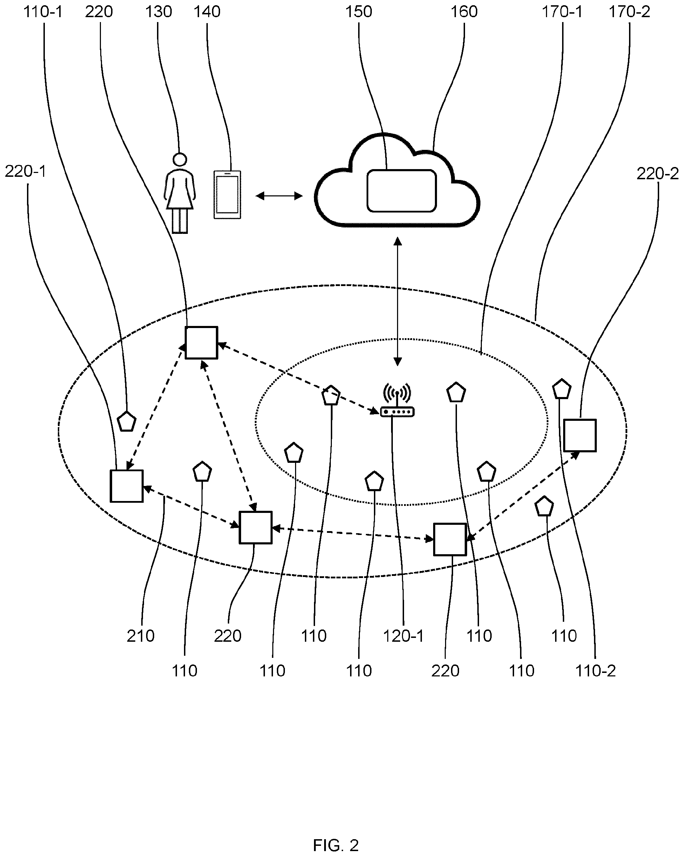

Fig. 2 shows a system and a wireless mesh network 210, indicated in Fig. 2 by dashed arrows, to determine a location of a tag 110 within a larger area, e.g., a multi-story construction site, which extends the individual detection range 170-1 of the first gateway 120. To expand the detection range 170-1 to a detection range 170-2, several anchor nodes 220 may be placed on the site. The detection range 170-1 is now expanded to the detection range 170-2 and both the tags 110-1 and 110-2 are within the enlarged detection range 170-2. The anchor nodes 220 scan, as tag detection devices, for tags 110, which send beacons within the RF range, to which the anchor nodes 220 are adjusted to. The anchor nodes 220 build a network 210 to send the scan information, including the detection information of the scanned tags 220, to the asset management system 150. The anchor nodes 220 can link-up with other anchor nodes 220 and dynamically set up a mesh network 210 to route data towards the first gateway 120-1 in this network 210. The first gateway 120-1 then forwards the scan information to the asset management system 150. In the asset management system 150, all anchor nodes 220 may have assigned the location information of the first gateway 120, which is forwarding the detection information. The asset management system 150 may determine the location of the tag 110 with the assigned location information and inform a user 130 that the asset, related to the tag, is at this location.

The mesh network 210 of anchor nodes 220 may be also used to locate tags 110 on a large jobsite more precisely. The asset management system 150 may have location information for individual anchor nodes 220. When an anchor node 220 scans a tag 110, it may forward scan information including additional information, e.g., its own identification number and/or a signal strength of the scanned tag 110 to the first gateway 120-1. The first gateway 120-1 may send this information to the asset management system 150, which may determine where the tag 110 and therefore the related asset can be found on a specific jobsite, i.e., whether the location information of the tag 110 points to this specific jobsite. In Fig. 2, the tag 110-1 is scanned by anchor node 220-1, the asset management system 150 may have as location information for the anchor node 220-1: level 1 north west. The asset management system 150 therefore will locate the asset related to the tag 220-1 on level 1 north west. Tag 110-2 is scanned by anchor node 220-2 and the asset management system 150 may have the location information level 2 east for the anchor node 220-2. If a tag 220 is scanned by multiple anchor nodes 220, the additional information sent by these anchor nodes 220 to the asset management system 150, e.g., signal strength of beacons received at anchor nodes 220 from the tag 220, may be used to determine its location.

Construction sites are not static. They may continuously change, grow, or get reduced in size again. Therefore, the infrastructure to track tags 110 and their related assets may change, e.g., new anchor nodes 220 may be installed or previously installed anchor nodes 220 may be moved around by workers on the construction site. Anchor nodes 220 may not have location information in the asset management system 150 available, or, when an anchor node 220 is moved, the defined location information in the asset management system is not anymore a correct representation of its new physical location.

Information on movement of anchor nodes 220 may mitigate the problems arising due to the dynamic situation of a construction site. E.g. anchor nodes 220 may be equipped with a motion sensor, e.g., an accelerometer. With a motion sensor, an anchor node 220 may monitor its movement. When an anchor node 220, with a motion sensor is moved, movement information may be created, e.g., the anchor node 220 can send a notification to the asset management system 150, that it has been moved and that its previously defined location information cannot be trusted anymore to determine the location of a tag 220 scanned by it. The asset management system 150 may at least avoid determining a wrong location for a moved tag 220, by ignoring scan information comprising detection information of the moved tag.

The anchor node 220 may also effect an alarm, e.g., by a blinking LED on it, to indicate to a worker to define new and corrected location information for the anchor node in the asset management system 150. Alternatively or additionally, the asset management system 150 may effect an alarm, when it receives a notification from an anchor node 220 that it has been moved and needs to be reassigned to its new location with an updated location information. The asset management system 150 may also forward this alarm to users 130, e.g., on their smartphone, tablet, or PC.

If a tag 110 is scanned by multiple anchor nodes 220, the asset management system may ignore the scan and detection information from anchor nodes 220, that have no defined location information and/or the anchor nodes 220 that have information on movement, e.g., that have sent a notification, that they have been moved and the defined location information is not valid anymore. The asset management system 150 may use the scan and detection information received from other anchor nodes 220, with presumedly valid location information, to determine the location of the tag 110 and the related asset.

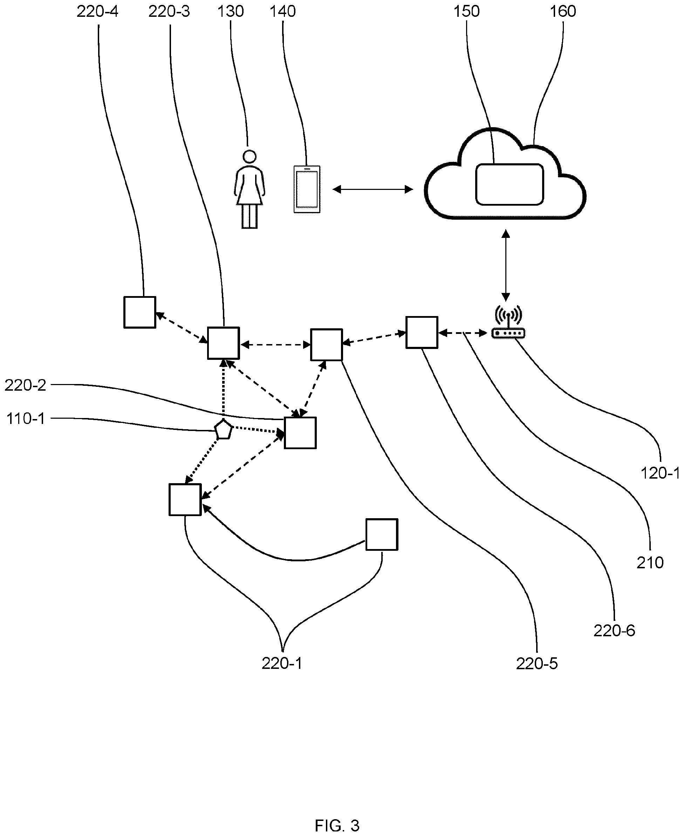

Fig. 3 shows the situation of determining a location of a tag 110-1, when an anchor node 220-1, used as tag detection device, is moved in a wireless mesh network 210. Anchor nodes 220-1, 220-2, and 220-3 all receive beacons from the tag 110-1, i.e., a signal strength of a RF signal for the beacons is strong enough to be received and processed at the positions of the anchor nodes 220-1, 220-2, and 220-3. Although there might be a certain directional characteristic due to the antenna shape of the tag 110-1, generally the signal of a beacon is distributed in all directions from the tag 110-1. The anchor nodes 220-1, 220-2, and 220-3 send scan information, including the information that they have detected the tag 110-1, via a mesh network 210, indicated by dashed arrows, to the first gateway 120-1. From the first gateway 120-1 the information is forwarded to the asset management system 150, hosted in a cloud 160. The connection from the first gateway 120-1 is indicated by a solid arrow and may be a telecommunications network, e.g., comprising a cellular network. The anchor node 220-1, which has been moved, as indicated by a solid arrow, to a new position, has included in its scan information or in a separate notification to the asset management system 150, information on its movement. The asset management system 150 may then use only the location information for the anchor nodes 220-2 and 202-3 and disregard the location information for the anchor node 220-1, when determining the location for the tag 110-1 and a related asset.

Alternatively, the anchor node 220-1 may also refrain from sending scan information including detection information for tag 110-1, upon evaluating from its information on movement, that it has been moved and therefore its location information is potentially not correct anymore. The anchor node 220-1 may instead raise an alarm in the asset management system 150 to define updated location information for the anchor node 220-1. In this alternative, the asset management system 150 does not have any information that the tag 110-1 has been detected by the anchor node 220-1 and will proceed only with the scan information from the anchor nodes 220-2 and 220-3. The anchor node 220-1 may continue to be part of the mesh network 210, e.g., route messages, but may not send detection information of the detected tag 110-1 or any tag 110. The anchor node 220-1 may require that the user 130 defines a new, updated location in the asset management system 150 and reinstalls it, e.g., by pressing a button on the anchor node 220-1 to make it reconnect with the mesh network 210 and/or to make it start sending scan information, including the detection information, again. The anchor node 220-1 may also require a confirmation message from the asset management system 150 on the definition of updated location information before sending scan information, including detection information, again.

The asset management platform may also determine the location of a tag 110 with the location information of the anchor node 220 that reports the highest received signal strength of beacons of the tag 110 and that has defined location information in the asset management system 150 without any indication that the anchor node 220 may have been moved.

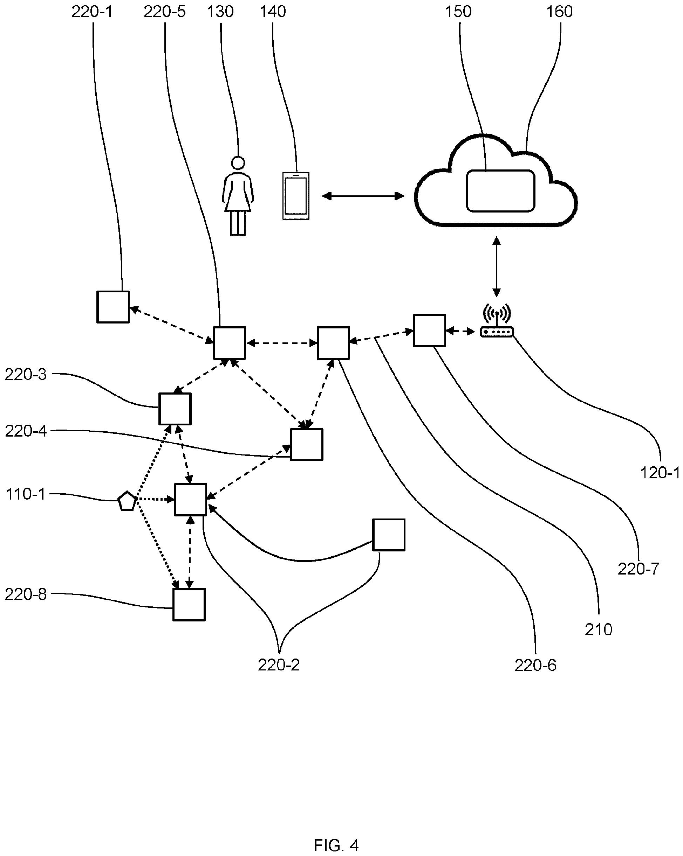

Fig. 4 shows a determination of a location of a tag 110-1, when an anchor node 220-2, used as tag detection device, is moved in a wireless mesh network 210. The anchor node 220-2 may send a notification to the asset management system 150, that its previously defined location information may not be correct anymore. Beacons of tag 110-1 are scanned by the anchor nodes 220-2, 220-3, and 220-8. The anchor nodes 220-2, 220-3, and 220-8 may send scan information, including detection information, e.g., including a signal strength from the beacons from tag 110-1 received at the anchor nodes 220-2, 220-3, and 220-8, and additional information, e.g., identification numbers of the anchor nodes 220-2, 220-3, and 220-8, to the asset management system 150 via the mesh network 210 and a first gateway 120-1. Based on the scan information, the asset management system 150 may determine that the tag 110-1 is closest to anchor node 220-2, as it shows the highest signal strength for the beacons of tag 110-1. The asset management system 110-1, however, disregards anchor node 220-2, as it is flagged as having an undefined location, due to the information of movement notification. The asset management system 150 may look up for the anchor node 220 with the second highest signal strength and find the anchor node 220-3 to be the next best assumption regarding the location of the tag 110-1. Therefore, the asset management system 150 may use the location information from anchor node 220-4 to determine the location of the tag 110-1 and the related asset. The asset management system 150 may also use the third highest signal received by anchor node 220-8 and use additional information about a jobsite, where the anchor nodes 220 are used, e.g., a map of the jobsite, to calculate a location based upon the location information of the anchor nodes 220-3 and 220-8 and, e.g., the received signal strengths.

Anchor nodes 220 may have coordinates as location information in the asset management system, e.g., coordinates representing their position on a jobsite. If a tag 110 is scanned by multiple anchor nodes 220, the asset management system 150 may determine the location of the tag 110 from the defined coordinates of these anchor nodes 220. Coordinates may be useful for an algorithm to determine the location of a tag 110 using the location information of a plurality of anchor nodes, particularly, in combination with a received signal strength of beacons of the tag 110 received at the plurality of anchor nodes 220.

An anchor node 220 may not send a notification or an information on movement, indicating a movement, to the asset management system 150, if it detects a small movement of a duration less than a predefined first time period or it may only send a notification if it detects a continuous motion longer than predefined second time period. Other thresholds may be used, and the assessment, whether a movement has happened may be done also, based on information on movement, e.g. motion sensor data, in the asset management system 150. E.g., a user 130 may move an anchor node 220 from a floor to a nearby window and it took less than 5 seconds. The duration of the movement may be below a threshold and the anchor node 220 may not send any notification to the asset management system 150. Another user 130 moves an anchor node 220 from one room to another room and the anchor node 220 was in motion continuously for more than 10 seconds. The anchor node 220 may send a notification to the asset management system 150 has been moved as information on movement.

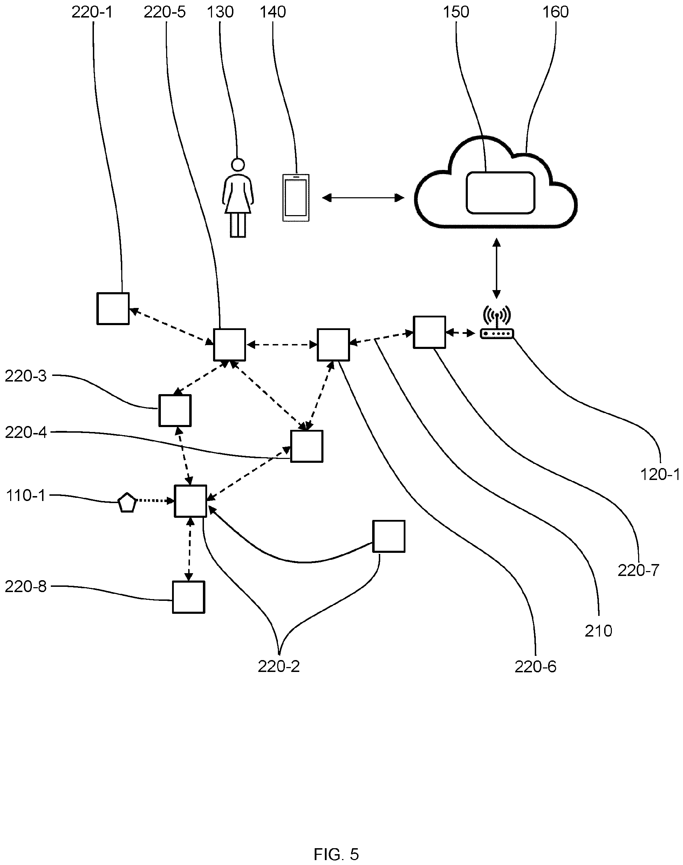

Fig. 5 shows a determination of a location of a tag 110 when only a moved tag detection device, e.g., an anchor node 220 is detecting the tag 110. If a tag 110 is only scanned by one or more anchor nodes 220 that do not have valid location information in an asset management system 150, it may be difficult to determine the location of the tag. In Fig. 5, anchor node 220-2 has been moved, indicated by an arrow, to a new location. The tag 220-2 may send a notification to the asset management system that its previously defined location information may not be correct anymore. The tag 110-1 is, however, only detected by the anchor node 220-2 at its new location. As the anchor node 220-2 does not have location information with its new location in the asset management system 150, the asset management system 150 is not able to determine the location of the tag 110-1 on a jobsite, based on anchor node 220-2 alone. A user 130 may find any additional information about the location of the tag 110-1 useful, e.g., also a less precise information of an information only about the neighborhood where the tag 110-1 may be found. In such a situation the location information from the neighbors of anchor node 220-2 in the wireless mesh network 210 may be used. It is, e.g., more likely that the tag 110-1 may be found in the region determined by the location information of the anchor nodes 220-3, 220-4, and 220-8 than in the region determined by the location information of, e.g., anchor node 220-7.

To enable the asset management system 150 to use such information on neighboring anchor nodes 220, the anchor nodes 220 may collect information about their 1-hop neighbors and send this as part of the scan information to the asset management system 150. With this information, the asset management system can create a logical map of mesh network 130. Using the neighboring information together with the location information of the anchor nodes 220, a location of a tag 110 may be determined, even when the tag 110 is only detected by an anchor node 220, which has been moved and for which not yet new location information has been defined. In Fig. 5, after anchor node 220-2 has been moved to its new location, its 1-hop neighbors, i.e., neighbors with a direct connection to the anchor node 220-2 in the mesh network 210, are anchor nodes 220-3, 220-4, and 220-8. Anchor node 220-3's 1-hop neighbors are, e.g., anchor nodes 220-2 and 220-5.

The tag 110-1 is scanned only by the anchor node 220-2, which does not have valid location information in the asset management system 150. The 1-hop neighbors to the anchor node 220-2, i.e., anchor nodes 220-3, 220-4, and 220-8 have location information without an indication of a movement. The location of the tag 110-1 can be approximately determined as the location nearby the location determined by the location information of the anchor nodes 220-3, 220-4, and 220-8.

To further improve the accuracy of the location of the tag 110-1, the asset management system 150 may also use the signal strength of the neighboring anchor nodes 220-3, 220-4, and 220-8 to the anchor node 220-2 in the mesh network 210. E.g., the signals sent in the wireless mesh network 210 by anchor nodes 220-3 and 220-8 may have a higher signal strength at anchor node 220-2 compared to the anchor node 220-4's signal. To use the signal strength of neighboring anchor nodes 220, anchor nodes 220 may send the received signal strength of their 1-hop neighbors, e.g., as part of the scan information, to the asset management system 150. Another useable metric may be the degree of overlap within the mesh network 210, e.g., the degree of overlap between 1-hop neighbors. The degree of overlap between anchor nodes 220-3 and 220-4 is 1, as their common 1-hop neighbor, apart from anchor node 220-2 is anchor node 220-5. Anchor node 220-4 has another 1-hop neighbor 220-6, which is no 1-hop neighbor to the anchor node 220-2. Anchor node 220-8 has no overlap with anchor nodes 220-3 and 220-4. Therefore, it might be concluded that anchor nodes 220-3 and 220-8 are the closest neighbors to anchor node 220-2 based on a minimum degree of overlap and highest signal strength at 220-2.

Alternatively or additionally to using a motion detector to evaluate whether a movement has happened for an anchor node 220, it is also possible to use changes of, e.g., 1-hop neighbors to detect the movement of a location of the anchor node 220. Anchor nodes 220 may store a snapshot of their 1-hop neighbors. The anchor nodes 220 may monitor their movement by detecting a change in the neighbors. A threshold may be defined, e.g., a predefined degree of change, before a notification is sent to an asset management system 150, that the tag 150 may have been moved. In Fig. 5, anchor node 220-2, at its first location, had only anchor node 220-4 as 1-hop neighbor. After anchor node 220-2 has been moved to its new location, anchor node 220-2 has anchor nodes 220-3, 220-4, and 220-8 as new 1-hop neighbors. A threshold may have been defined as a degree of change, where 50 % of the anchor nodes 220 in a first snapshot are not included in a second snapshot or vice versa. As due to the movement more than 50% of its neighbors are new, anchor node 220-2 sends a notification to the asset management platform, that its previously defined location information may not be valid anymore. It may be possible that several neighbors of an anchor node 220 have been moved but that the anchor node 220 itself is still at its location. Such a case may result in both the anchor node 220 and its moved neighbors notify the asset management system 150, that their defined location information might not be valid anymore.

The monitoring of the movement may be done also in the asset management system 150. Anchor nodes 220 regularly send information about their 1-hop neighbors to the asset management system 150, e.g., as part of their scan information. The asset management system 150 determines from the information about the 1-hop neighbors, whether a movement of an anchor node 220 has happened and whether the location information of the anchor node 220 may not be valid anymore.

An anchor node 220, which has not been connected to any network 210 or to any other anchor nodes 220 for a predetermined time, may, upon connecting again, also send a notification to an asset management system 150, that its previously defined location information may not be valid anymore.

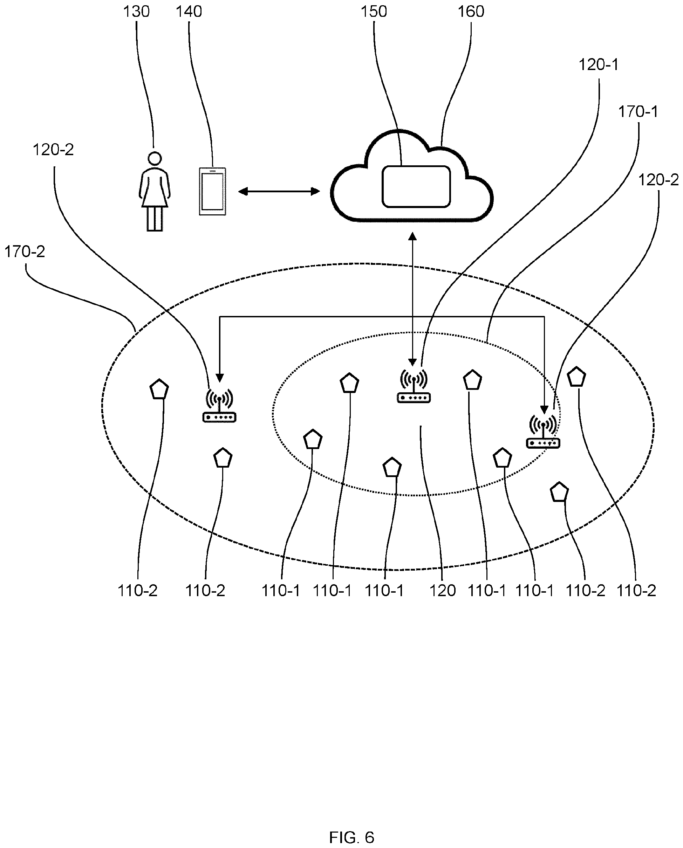

Fig. 6 shows that it is also possible to cover a large area by a system to determine a location of a tag 110 with a network of gateways 120-1, 120-2. Like the above-described network of anchor nodes 220, in particular regarding to the situation of Fig. 2, adding second gateways 120-2 to the first gateway 120-1, and building a network of the first gateway 120-1 and the second gateways 120-2, which is connected to an asset management system 150, may increase a tag detection area 170-1 to a tag detection area 170-2. The increase of the detection area 170-1 to 170-2 may enable a detection of both tags 110-1 and tags 110-2. A construction site may be covered by setting up several gateways 120 that can detect tags 110 in their range and send scan information, including detection information, to the asset management platform directly 150. The above-described methods for determining a location of a tag 110 may also be applied to a network of the first and second gateways 120-1, 120-2, in particular if a movement can be monitored by using the gateways 120-1, 120-2 and/or one or more gateways 120-1, 120-2 are able to discover other gateways 120-1, 120-2 within their RF ranges. Also, hybrid networks, comprising a first gateway 120-1, and comprising one or more anchor nodes 220 and one or more second gateways 120-2 are possible.

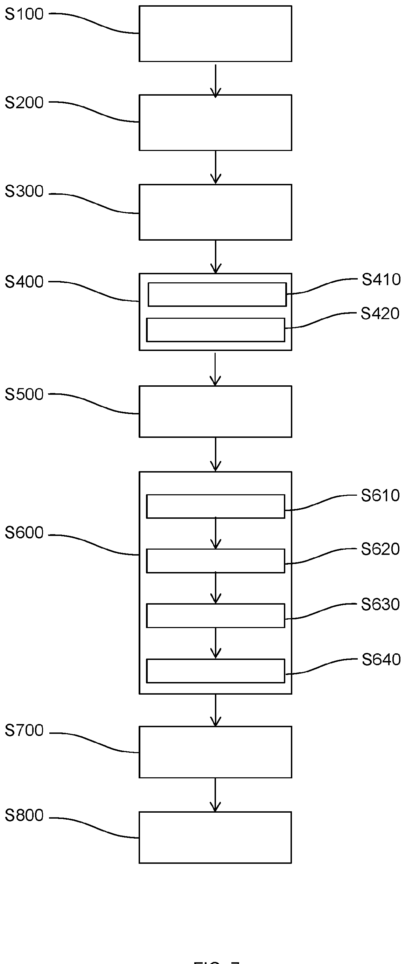

Fig. 7 shows a flowchart of a method to determine a location of a tag 110. In step S100, a network comprising tag detection devices and at least one connection of the network with an asset management system 150 via a first gateway 120-1 is set up. The network may be a wireless mesh network 210. The tag detection devices may be gateways 120-1, 120-2 and/or anchor nodes 220.

In step S200, in the asset management system 150, a location information for the tag detection devices is defined, e.g., a location on a construction site, in a building, or on a jobsite may be assigned as location information to the tag 110. Location information may be, e.g., a specific room in a building, a container on a jobsite, or an indication like southwest area on the second floor, the location information may be also coordinates.

In step S300, the tag detection devices scan for the tag 110. The tag detection device may be in a listening mode and evaluate received RF signals, e.g., beacons sent by various tags 110, and/or communication over the wireless network 210.

In step S400, a movement of a moveable tag detection device is monitored, to create information on movement. This may be done in step S410 of step S400, using a motion sensor, particularly, an acceleration sensor. This may be done also by monitoring the signal strength of other devices in the wireless mesh network 210, e.g., if several other devices in the wireless mesh network see at the same time the signal strength of the moveable tag detection device changed, this may indicate a movement of the moveable tag detection device. Both in the asset management system 150 and/or in the tag detection device an evaluation of information on movement may be done. E.g., the moveable tag detection device may evaluate sensor data, find it has been moving, and stop sending information about detected tags 110. The asset management system 150 may evaluate signal strength data within the wireless mesh network 210, and may determine that the moveable tag detection device has been moved. When a movement is detected, an alarm may be effected as step S420, part of step S400.

In step S500, scan information from the tag detection devices to the asset management system 150 is sent via the wireless mesh network 210, comprising detection information from the one or more tag detection devices, which detect the tag. The scan information may also comprise data on signal strengths within the wireless mesh network, on the wireless mesh network itself, e.g., on the neighbors of a tag detection device, and/or on movements of tag detection devices. The detection information may comprise information about detection of beacons from a tag 110, signal strength of the beacons, and/or identification number of the tag 110.

In step S600, the asset management system 150 determines the location of the tag. The step S600 comprises the steps: S610 using the scan information with the detection information, e.g., the information that a specific tag detection device has detected a tag 110. In step S620, the location information defined for the tag detection devices is used to evaluate the location of the tag 110. In step S630, information on movement is used, e.g., it is made sure, that location information of a tag detection device, which has been moved and which therefore may not provide reliable location information anymore, is disregarded for determining the location of the tag 110. The information on movement may be used by the asset management system 150, disregarding detection information as part of the scan information of a moved tag 110. The information on movement may be used also by the tag detection device itself, by not sending any detection information anymore, after the tag detection device has evaluated that it has been moved.

In step S640, the step S600 of determining the location of the tag 110 is further comprising using a measured signal strength of the tag 110 received by the one or more tag detection devices, which detect the tag 110. E.g., when several tag detection devices detect a tag 110, the location information of the tag detection device receiving the beacons of the tag detection device with the highest signal strength may be used for determining the location of the tag 110. Alternatively or additionally, information on a network neighbor of the one or more tag detection devices, which detect the tag 110, may be used in step S640.

In step S700, the determined location of a tag 110 may be connected with the location of an asset related to the tag 110, e.g., in a database a relation of tags 110 and assets may be defined and the asset management system 150 may search in the database under an identification number of the tag 110 for the related asset.

In step S800, the location may be sent to an end device 140, to be viewed by a user 130. The whole process of steps S100 to S800 may be initiated by the user 130 or may be part of an automated routine. The asset management system 150 may also simply store and track the location of tags 110 and/or their related assets in a database and respond to a request for a location of an asset by looking up the asset in the database.

### REFERENCE NUMERALS

- 110,-1,-2: tag
- 120, -1, -2: first, second gateway
- 130: user
- 140: end device
- 150: asset management system
- 160: cloud
- 170-1, -2: tag detection area
- 210: mesh network
- 220, -1, -2, ...: anchor node

- S100: setting up network
- S200: defining location information
- S300: scan for tag
- S400: monitoring a movement
- S410: monitoring a motion sensor
- S420: effecting an alarm
- S500: sending scan information
- S600: determining location of a tag
- S610: using scan information
- S620: using location information
- S630: disregarding location information
- S640: using measured signal strength
- S700: connecting location of tag with location of asset
- S800: sending location information to end device

## Claims

1. A method to determine a location of a tag (110), comprising the steps of:
- setting up (S100) a network comprising tag detection devices (120, 220) and at least one connection of the network with an asset management system (150) via a first gateway (120-1);
- defining (S200), in the asset management system (150), a location information for the tag detection devices (120, 220);
- scanning (S300) with the tag detection devices (120, 220) for the tag (110);
- sending (S500) scan information from the tag detection devices (120, 220) to the asset management system (150) via the network (210), comprising detection information from the one or more tag detection devices (120, 220), which detect the tag (110); and
- determining S(600), by the asset management system (150), the location of the tag (110), comprising the steps of:
- using the scan information and
- using the location information.

2. The method according to claim 1, wherein the set up network (210) is a mesh network (210), particularly, a wireless mesh network (210).

3. The method according to claim 1 or 2, wherein the tag detection devices (120, 220) comprise
- a second gateway (120-2), which is connected to the asset management system (150), and/or
- a first anchor node (220), which is connected to a second anchor node (220), to the first gateway (120-1) and/or to the second gateway (120-2).

4. The method according to any of the claims 1 to 3, further comprising the steps of:
- monitoring (S400) a movement of a moveable tag detection device (120, 220), of the tag detection devices (120, 220), to create information on movement;
and the step of determining the location of the tag (110) is further comprising the step of:
- using (S630) the information on movement of the moveable tag detection device (120, 220), when the information on movement indicates the moveable tag detection device (120, 220) has moved, particularly, disregarding the defined location information of the moveable tag detection device (120, 220), when the information on movement indicates it has moved.

5. The method according to claim 4, wherein the step of monitoring the movement is comprising monitoring (S410) a motion sensor, particularly, an acceleration sensor, of the moveable tag detection device (120, 220).

6. The method according to claim 4 or 5, wherein the step of monitoring the movement is comprising monitoring indication of changes of distance of the movable tag detection device (120, 220) to one or more others of the tag detection devices (120, 220), particularly, the indication of changes of distance comprising:
- changes of a network neighbor of the moveable tag detection device (120, 220), particularly, in a mesh network (210);
- changes of signal strength of signals sent by the moveable tag detection device (120, 220) and received by the one or more others of the tag detection devices (120, 220);
- changes of signal strength of signals sent by the one or more others of the tag detection devices (120, 220) and received by the movable tag detection device (120, 220).

7. The method according to any of the claims 4 to 6, wherein an alarm is effected (S420), when the information on movement of the moveable tag detection device (120, 220) indicates it has moved, particularly, effecting a visual or acoustical alarm on the moveable tag detection device (120, 220), an alarm in the asset management system (150), and/or an alarm on an end device (140) of a user (130).

8. The method according to any of the claims 1 to 7, wherein the step of determining the location of the tag (110) is further comprising the step of: using (S640) a measured signal strength of the tag (110) received by the one or more tag detection devices (120, 220), which detect the tag (110).

9. The method according to any of the claims 1 to 7, wherein the step of determining the location of the tag (110) is further comprising the step of: using information on a network neighbor of the one or more tag detection devices (120, 220), which detect the tag (110).

10. A system for determining a location of a tag (110) comprising:
- a first gateway (120-1), configured to connect to an asset management system (150);
- a plurality of tag detection devices (120, 220), configured to detect beacons from a tag (110) and configured to build together with the first gateway (120-1) a network (210) connected to the asset management system (150); and
- the tag (110), configured to send beacons.

11. The system according to claim 10, wherein the tag detection devices (120, 220) comprise:
- a second gateway (120-2), which is configured to be connected to the asset management system (150), and/or
- a first anchor node (220), which is configured to be connected to a second anchor node (220), to the first gateway (120-1) and/or to the second gateway (120-2),
particularly, wherein one or more of the tag detection devices (120, 220) comprises a motion sensor, particularly, an acceleration sensor.

12. A network (210), comprising tag detection devices (120, 220), and an asset management system (150), adapted to execute together the method according to any of the claims 1 to 9.

13. The network (210) and the asset management system (150) according to claim 12, comprising
- a first gateway (120-1), connected to the asset management system (150),
- a plurality of tag detection devices (120, 220), configured to detect beacons from tags (110), particularly, wherein the tag detection devices (120, 220) comprise:
- a second gateway (120-2), which is connected to the asset management system (150), and/or
- a first anchor node (220), which is connected to a second anchor node (220), to the first gateway (120-1) and/or to the second gateway (120-2).

14. The network (210) and the asset management system (150) according to claim 12 or 13, wherein the network (210) comprises a mesh network (210) comprising anchor nodes (220) as tag detection devices.

15. A computer program product comprising instructions to cause the network (210), comprising tag detection devices (120, 220), and the asset management system (150) of claims 12 or 14 to execute the method according to any of the claims 1 to 9.
